# EUROPÄISCHE PATENTSCHRIFT

(11) **EP 2 757 332 B1**
(45) Veröffentlichungstag und Bekanntmachung des Hinweises auf die Patenterteilung: **24.07.2019**
(21) Anmeldenummer: 13197859.5
(22) Anmeldetag: 17.12.2013
(51) Int. Cl.: F24S 25/35, F24S 25/634, F24S 25/636, F24S 25/65

(54) **Befestigungssystem zur Montage von Solarmodulen**
Fastening system for mounting solar modules
Système de fixation pour le montage de panneaux solaires

(30) Priorität: 20.12.2012 DE 202012012462 U; 20.12.2012 US 201261740032 P
(43) Veröffentlichungstag der Anmeldung: 23.07.2014
(73) Patentinhaber: Mounting Systems GmbH, 15834 Rangsdorf (DE)
(72) Erfinder: Redel, Mark, 13405 Berlin (DE)
(74) Vertreter: Kohler Schmid Möbus Patentanwälte

(56) Entgegenhaltungen:
- EP-A1- 2 194 205
- EP-A1- 2 410 190
- DE-U1-202011 107 843
- DE-U1-202012 005 671
- FR-A1- 2 950 375
- KR-Y1- 200 451 576
- US-S1- D 627 717

## Beschreibung

Die Erfindung betrifft ein Befestigungssystem zur Montage von Solarmodulen.

Solarmodule, beispielsweise Photovoltaikmodule zur Erzeugung elektrischer Energie oder Kollektormodule zur Erwärmung von Wärmeträgermedien, werden üblicherweise in Dach- oder Freilandmontage auf parallel zueinander angeordneten Profilschienen befestigt.

DE 20 2012 005 671 U offenbart ein Befestigungssystem für Solarmodule.

An Montagesysteme für Solarmodule werden vielfältige Anforderungen gestellt. So müssen sie über eine ausreichende Festigkeit zur Halterung der Module verfügen, gleichzeitig aber ein möglichst geringes Gewicht haben, um insbesondere die Höchstlastgrenzen von Dächern nicht zu überschreiten. Außerdem sollte das System möglichst variabel auf unterschiedlichsten Untergründen und für unterschiedliche Modulanordnungen einsetzbar sein und darüberhinaus eine einfache und schnelle Montage ermöglichen.

Aufgabe der vorliegenden Erfindung ist es daher, ein verbessertes Montagesystem bereitzustellen, das all diesen vielfältigen Anforderungen gleichzeitig Rechnung trägt.

Das Befestigungssystem der vorliegenden Erfindung weist eine Anzahl von Profilschienen auf, wobei jede Profilschiene, in einer Querschnittansicht betrachtet, aufweist:
- eine Auflagefläche, die eine ebene Unterseite der Profilschiene bildet,
- einen ersten und einen zweiten Aufnahmeraum mit je einer seitlichen Öffnung, bei denen die Öffnungen in entgegengesetzte Richtungen weisen,
- einen dritten Aufnahmeraum in Form einer Hammerkopfnut, der eine von der Unterseite der Profilschiene abgewandte Öffnung aufweist, bei denen die Öffnung von zwei bezüglich einer gedachten Mittelebene spiegelsymmetrischen Stegen begrenzt wird, die an ihrem jeweiligen freien Ende jeweils eine nach innen gewandte Kröpfung aufweisen,
- einen ersten rechteckigen allseitig umschlossenen zentralen Hohlraum, der von der Auflagefläche sowie dem ersten, zweiten und dritten Aufnahmeraum begrenzt wird und
- einen ersten und einen zweiten allseitig umschlossenen seitlichen Hohlraum, die an einander gegenüberliegenden Seiten des dritten Aufnahmeraumes und jeweils angrenzend an einen aus dem ersten und dem zweiten Aufnahmeraum angeordnet sind.

Die Profilschienen des Befestigungssystems der vorliegenden Erfindung sind besonders leicht und verfügen trotzdem über eine hohe Stabilität. Da Profilschienen in der Regel bis zu 98 % des Gewichtes von Befestigungssystemen für Solarmodule ausmachen, ist mit einer Gewichtsverringerung der Profilschienen ein großer Effekt hinsichtlich der Gesamtlast durch ein Befestigungssystem zu erzielen. Darüberhinaus sind die Profilschienen des erfindungsgemäßen Befestigungssystems durch die Ausgestaltung des dritten Aufnahmeraumes in Form einer Hammerkopfnut mit Stegen, die Kröpfungen aufweisen, sowohl für die Aufnahme spezieller Bauelemente mit Haken als auch für die Aufnahme von Standardverbindungsmitteln wie beispielsweise Hammerkopfschrauben und Trapezmuttern geeignet und somit für eine schnelle und einfache Montage geeignet.

Besonders vorteilhaft ist eine Ausführungsform der Profilschienen, bei der die Höhe des ersten zentralen rechteckigen Hohlraums über der Auflagefläche größer ist als die Höhe des ersten und des zweiten Aufnahmeraumes über der Bodenplatte, so dass sich der erste zentrale Hohlraum jeweils seitlich mit dem ersten und zweiten seitlichen Hohlraum überlappt. Dies verleiht den Profilschienen zusätzliche Stabilität.

Darüberhinaus ist die Ausführung auch des ersten und zweiten Aufnahmeraumes jeweils in Form einer Hammerkopfnut vorteilhaft, so können neben speziellen Bauteilen auch Standardverbindungsmittel wie beispielsweise Hammerkopfschrauben und Trapezmuttern zur Montage eingesetzt werden.

Weiterhin ist es vorteilhaft, wenn die Profilschienen seitliche Außenwände aufweisen, die teilweise oder vollständig über ein gezahntes Profil verfügen. Durch die Verwendung gezahnter Profile kann das Verrutschen von anliegenden Bauelementen insbesondere während der Montage verhindert werden.

Das Befestigungssystem der Erfindung weist auch eine Vielzahl von Kliphaltern auf, die jeweils aufweisen:
- eine Kopfplatte mit einer Gewindebohrung sowie
- zwei seitlich an der Kopfplatte angeordnete Schenkel, deren von der Kopfplatte abgewandte Enden Haken aufweisen, die ausgebildet sind, Kröpfungen zu hintergreifen, wobei die Haken bezüglich einer Innenseite des jeweiligen Schenkels um einen Winkel von 15° zur Horizontalen hin nach innen geneigt sind, bei denen die Haken komplementäre Formen zu den Kröpfungen der Profilschienen aufweisen, bei dem die Vielzahl von Kliphaltern in den dritten Aufnahmeräumen der Profilschienen eingesetzt ist und die Haken der Kliphalter die Kröpfungen der Profilschienen dabei hintergreifen und bei dem an den Kliphaltern mittels in den Gewindebohrungen eingesetzten Schrauben Haltekörper befestigt sind.

Solche Kliphalter lassen sich durch leichten Druck in den dritten Aufnahmeraum der Profilschienen einsetzen und sind innerhalb der Schienen aber noch bis zur endgültigen Montage verschiebbar. Wird mit Hilfe eines derart ausgebildeten Kliphalters über eine Schraube ein Modul befestigt, so zieht die Schraube am in der Profilschiene eingesetzten Kliphalter und dieser sichert sich durch die Neigung der Haken um 15°selbst.

In einer vorteilhaften Variante ist die Kopfplatte der Kliphalter in der Aufsicht quadratisch. Mit Hilfe derartiger Kliphalter lassen sich Profilschienen besonders vorteilhaft sowohl in einem Winkel von 90° zu den Solarmodulen, als auch im Stoß zwischen zwei Modulen anordnen.

Bei dem Befestigungssystem der Erfindung sind mindestens zwei Profilschienen zueinander senkrecht derart angeordnet, dass ein Kreuzverbinder, der in einer Querschnittansicht betrachtet aufweist:
- einen Mittelsteg, der ein rechtwinkliges Ende und ein abgeschrägtes Ende aufweist
- einen ersten am Mittelsteg näher am rechtwinkligen als am abgeschrägten Ende angebrachten L-förmigen Fortsatz,
- einen zweiten am Mittelsteg näher am abgeschrägten als am rechtwinkligen Ende und auf der dem ersten L-förmigen Fortsatz gegenüberliegenden Seite des Mittelstegs angebrachten L-förmigen Fortsatz,
mit dem ersten L-förmigen Fortsatz in den ersten oder den zweiten Aufnahmeraum der einen Profilschiene aufgenommen wird und über den zweiten L-förmigen Fortsatz mittels einer Schraube an einem der Vielzahl von Kliphaltern befestigt ist, welcher seinerseits im dritten Aufnahmeraum der zweiten Profilschiene eingesetzt ist.

Der Kreuzverbinder ermöglicht es, senkrecht zueinander angeordnete Profilschienen einfach und sicher miteinander zu verbinden.

Ein solches Befestigungssystem hat ein geringeres Gewicht als bisher bekannte Lösungen, darüberhinaus lassen sich mit einem derartigen Befestigungssystem Solarmodule schnell und unkompliziert montieren. Die Profilschienen werden auf einem Dach oder einer Ständerkonstruktion montiert, dann können die ersten Solarmodule aufgelegt werden. Die Kliphalter werden dann mit leichtem Druck in die dritten Aufnahmeräume der Profilschienen eingebracht und können anschließend mittels Verschieben an ihre endgültige Position gebracht werden. Dann können weitere benachbarte Solarmodule aufgelegt und anschließend über die Haltekörper durch Anziehen der Schrauben die Solarmodule gemeinsam fixiert werden. Das erfindungsgemäße Befestigungssystem erlaubt es aber auch zunächst alle Solarmodule aufzulegen und erst danach zwischen den benachbarten Solarmodulen die Kliphalter mit den daran angebrachten Haltekörpern einzubringen.

Für den Aufbau größerer Flächen von Solarmodulen können die Profilschienen in einer weiteren vorteilhaften Weiterbildung des Befestigungssystems über einen Teleskopverbinder, welcher jeweils in den ersten zentralen Hohlraum der beiden Profilschienen aufgenommen wird, miteinander verbunden werden. In der einfachsten Form ist dieser Teleskopverbinder in Form eines Vierkantrohres gefertigt, dessen Außenmaße den Innenmaßen des ersten zentralen Hohlraums der zu verbindenden Profilschienen entsprechen.

Weitere Merkmale und Vorteile werden bei Betrachtung der nachfolgend mit Bezug auf die Figuren beschriebenen Ausführungsbeispiele offensichtlich werden.
- Fig. 1: zeigt eine Profilschiene des Befestigungssystems gemäß der Erfindung.
- Fig. 2: zeigt einen Kliphalter des Befestigungssystems gemäß der Erfindung.
- Fig. 3: zeigt einen Ausschnitt aus einem Befestigungssystem gemäß der Erfindung.
- Fig. 4: zeigt einen weiteren Ausschnitt aus einem Befestigungssystem gemäß der Erfindung.
- Fig. 5: zeigt einen weiteren Ausschnitt aus einem Befestigungssystem gemäß der Erfindung.
- Fig. 6: zeigt einen weiteren Ausschnitt aus einem Befestigungssystem gemäß der Erfindung.

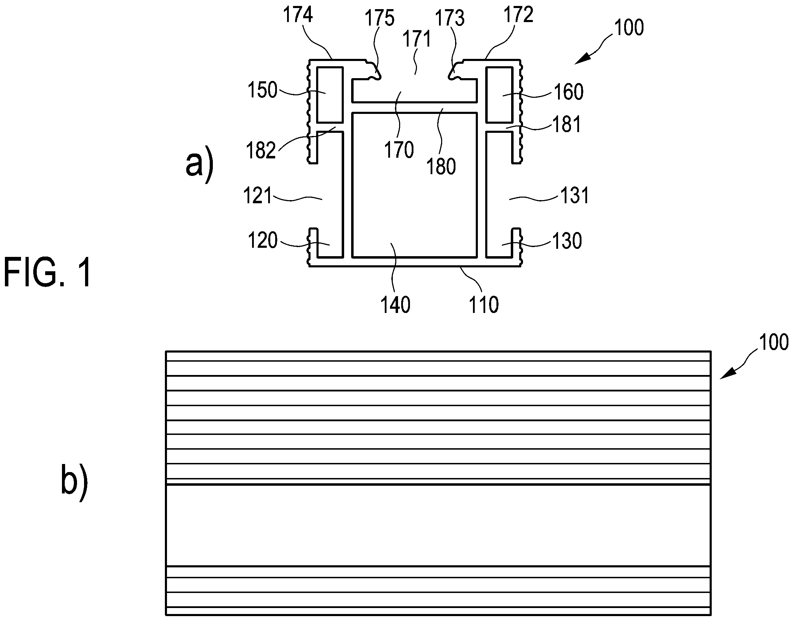

Fig. 1 zeigt eine Profilschiene 100 zur Montage von Solarmodulen. In Fig. 1a ist die Profilschiene 100 in einer Querschnittansicht dargestellt, in Fig. 1b in einer Seitenansicht. Die Profilschiene 100 verfügt über eine Auflagefläche 110, die eine Unterseite der Profilschiene bildet. Über dieser sind ein erster Aufnahmeraum 120 und ein zweiter Aufnahmeraum 130 angeordnet, diese verfügen jeweils über eine seitliche Öffnung 121 und 131 und sind in Form von Hammerkopfnuten ausgebildet. Zwischen dem ersten und dem zweiten Aufnahmeraum 120, 130 ist über der Auflagefläche 110 ein erster rechteckiger zentraler Hohlraum 140 angeordnet. Dieser dient zum einen der Stabilität der gesamten Profilschiene bei gleichzeitig geringem Gewicht, zum anderen können im Hohlraum Verbindungsstücke wie beispielsweise Teleskopverbinder angebracht werden. Über dem ersten und dem zweiten Aufnahmeraume ist jeweils ein erster seitlicher Hohlraum 150 oder zweiter seitlicher Hohlraum 160 ausgebildet. Über dem ersten zentralen Hohlraum 140 und zwischen dem ersten seitlichen Hohlraum 150 und dem zweiten seitlichen Hohlraum 160 ist ein dritter Aufnahmeraum 170 in Form einer Hammerkopfnut ausgebildet. Der dritte Aufnahmeraum 170 weist eine von der Unterseite der Profilschiene abgewandte Öffnung 171 auf, wobei die Öffnung begrenzt wird, von zwei bezüglich einer gedachten Mittelebene spiegelsymmetrischen Stegen 172,174, die an ihrem jeweiligen freien Ende jeweils eine Kröpfung 173, 175 aufweisen. Durch die Ausgestaltung des dritten Aufnahmeraumes in Form einer Hammerkopfnut und zusätzlich die Ausbildung der die Öffnung begrenzenden Stege mit Kröpfungen, ist die Profilschiene sowohl zur Aufnahme von Kliphaltern als auch zur Aufnahme von Standardverbindungsmitteln geeignet.

Da im hier gezeigten Ausführungsbeispiel die Höhe des zentralen Hohlraumes 140 über der Auflagefläche größer ist als die Höhe des ersten und des zweiten Aufnahmeraumes 120, 130 grenzen auch der erste und zweite seitliche Hohlraum an den ersten zentralen Hohlraum an. Die unteren Wände der seitlichen Hohlräume 181, 182 und die untere Wand 180 des dritten Aufnahmeraumes liegen folglich nicht in einer gemeinsamen Ebene, diese Anordnung führt zu einer erhöhten Stabilität der Profilschiene.

Sowohl in Fig. 1a als auch in Fig. 1b ist zu erkennen, dass die seitlichen Außenwände der Profilschiene 100 mit einem gezahnten Profil ausgebildet sind. Dieses Profil kann ein Verrutschen von Komponenten bei der Montage verhindern oder zumindest erschweren.

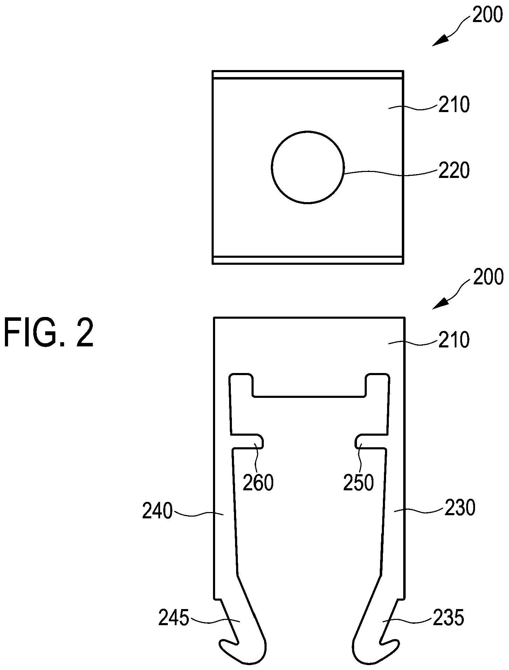

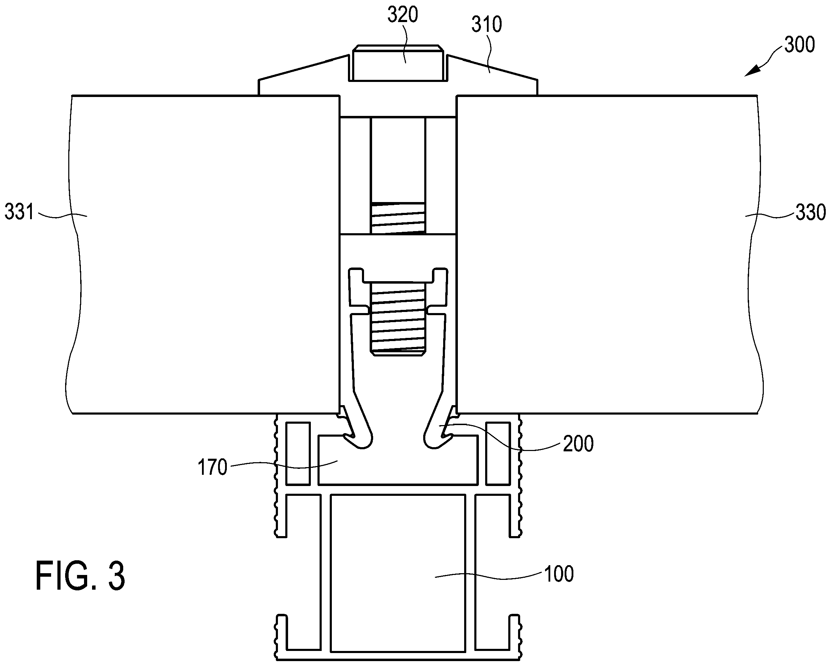

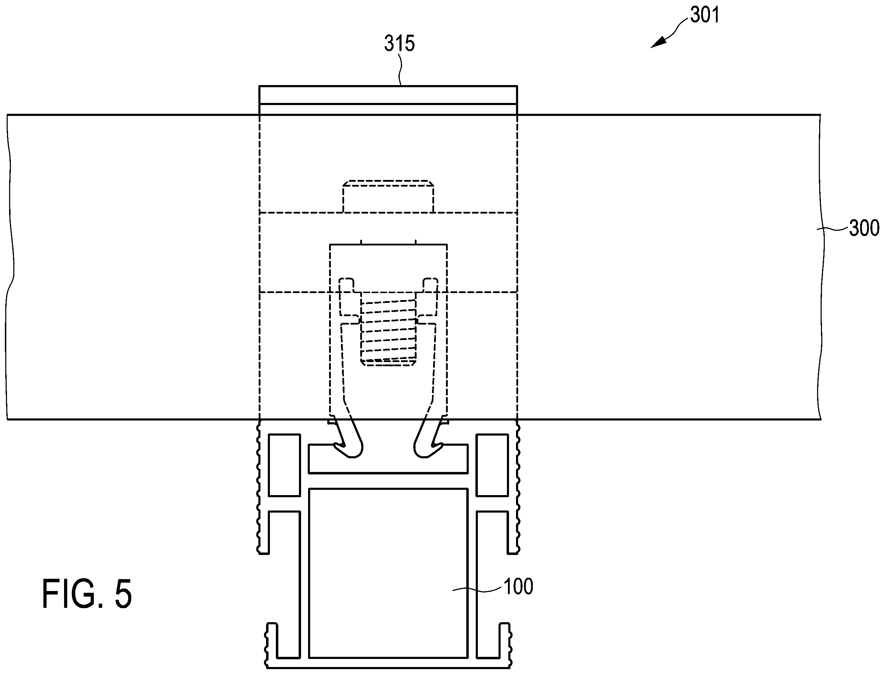

Fig. 2 zeigt eine Ausführungsform eines Kliphalters 200. Fig. 2 zeigt den Kliphalter in der Aufsicht. In Fig. 2 ist der Kliphalter 200 auch in einer Seitenansicht dargestellt. Der Kliphalter weist eine Kopfplatte 210 mit einer Gewindebohrung 220 auf, in diesem Ausführungsbeispiel ist die Kopfplatte quadratisch. Durch die quadratische Form der Kopfplatte lassen sich Profilschienen besonders vorteilhaft sowohl in einem Winkel von 90° zu den Solarmodulen, als auch im Stoß zwischen zwei Modulen anordnen, wie in den Fig. 3 und 5 noch detailliert gezeigt wird. Seitlich an der Kopfplatte 210 sind zwei Schenkel 230, 240 angeordnet. Die Schenkel weisen jeweils an ihrem von der Kopfplatte abgewandten Ende Haken 235, 245 auf, die ausgebildet sind, Kröpfungen der Profilschiene zu hintergreifen. Diese Haken 235, 245 sind im Ausführungsbeispiel jeweils um 15° zur Horizontalen bezüglich einer Innenseite des jeweiligen Schenkels nach innen geneigt. Derartige Kliphalter 200 können mit leichtem Druck in die Profilschiene eingebracht werden und sind dort noch verschiebbar. Darüberhinaus ist an den Schenkeln 230, 240 an der Innenseite je ein Steg 250, 260 angebracht. Ist in den Kliphalter im Montagezustand eine Schraube eingebracht, die bis zu den Stegen 250, 260 reicht, so kann mit Hilfe der Stege ein Zusammendrücken des Kliphalters verhindert werden.

Fig. 3 zeigt einen Teil eines Befestigungssystems 300 gemäß der Erfindung, wobei das Befestigungssystem 300 insgesamt mehrere Profilschienen und eine Vielzahl von Kliphaltern aufweist. In einem dritten Aufnahmeraum 170 einer Profilschiene 100 ist hier ein Kliphalter 200 angebracht. Die Haken an den Enden der Schenkel des Kliphalters hintergreifen, hierbei die Kröpfungen der Stege, die die Öffnung des dritten Aufnahmeraumes begrenzen. Die Haken verfügen dabei über zu den Kröpfungen komplementäre Formen. Ein Haltekörper 310 für die Halterung von zwei benachbarten Solarmodulen ist mittels einer Schraube 320 am Kliphalter 200 befestigt. Mittels des Haltekörpers 310 und durch Anziehen der Schraube 320 werden die Solarmodule 330, 331 auf der Profilschiene 100 fest montiert. Die Solarmodule können bei diesem Befestigungssystem auf die Profilschienen aufgelegt und anschließend mittels Einklipsen der Kliphalter fixiert werden. Dies erlaubt eine schnelle und einfache Montage.

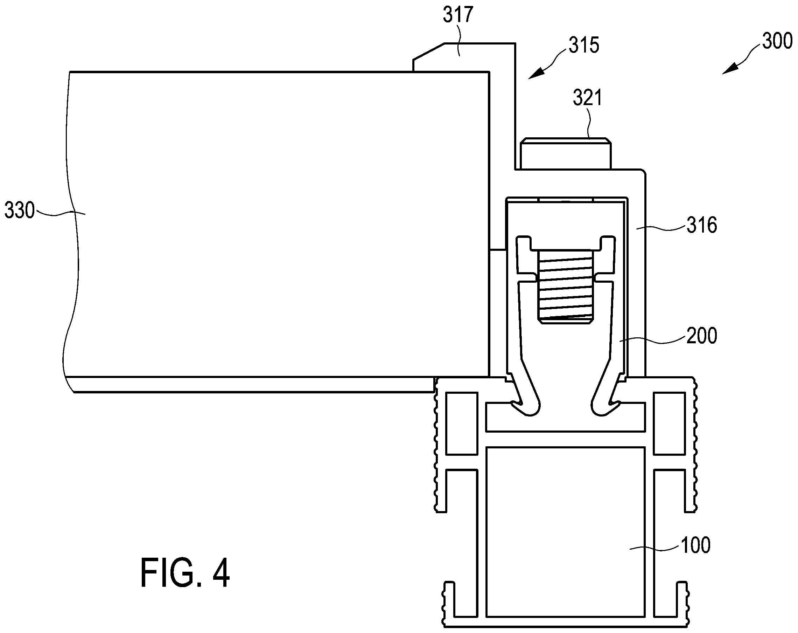

Fig. 4 zeigt ebenfalls einen Teil des Befestigungssystems 300. An dieser Stelle des Befestigungssystems wird statt eines Halterkörpers für die Halterung von benachbarten Solarmodulen ein Haltekörper 315 für nur ein Solarmodul verwendet, ein solcher Haltekörper wird auch als Endhaltekörper bezeichnet. Der Endhaltekörper 315 besteht in der Seitenansicht aus zwei L-förmigen Körpern, wobei der kurze Schenkel des ersten L-förmigen Körpers 316 am langen Schenkel des zweiten L-förmigen Körpers 317 ausgebildet ist. Der Endhaltekörper umschließt mit dem ersten L-förmigen Körper 316 einen Kliphalter 200 und ist mittels einer Schraube 321 an diesem befestigt. Mittels des zweiten L-förmigen Körpers 317 wird das Solarmodul 330 gehaltert und an die Profilschiene 100 angedrückt. Der Kliphalter 200 ist wiederum im dritten Aufnahmeraum der Profilschiene 100 montiert. Mit Hilfe des Endhalters lassen sich die jeweils letzten Solarmodule einer Reihe auf den Profilschienen befestigen. Wie der Vergleich mit Fig. 3 zeigt können am Kliphalter Schrauben unterschiedlicher Länge abgestimmt auf Modulhöhe und Einsatzort im Befestigungssystem verwendet werden können. Mit dem Kliphalter lässt sich aber auch die Befestigung von Solarmodulen aller gängigen Modulrahmenhöhen mit einer Schraubenlänge realisieren, so dass für den Monteur das Mitführen vieler unterschiedlicher Schrauben entfällt.

Fig. 5 zeigt einen Teil eines Befestigungssystems 301, bei dem die Profilschiene 100 in einem Winkel von 90° zum Solarmodul 330 angeordnet ist. Diese Anordnung ist bei Photovoltaik-Systemen üblich. Auch hier wird das Solarmodul 330 über einen Endhaltekörper 315 mit Hilfe des Kliphalters auf die Profilschiene 100 montiert.

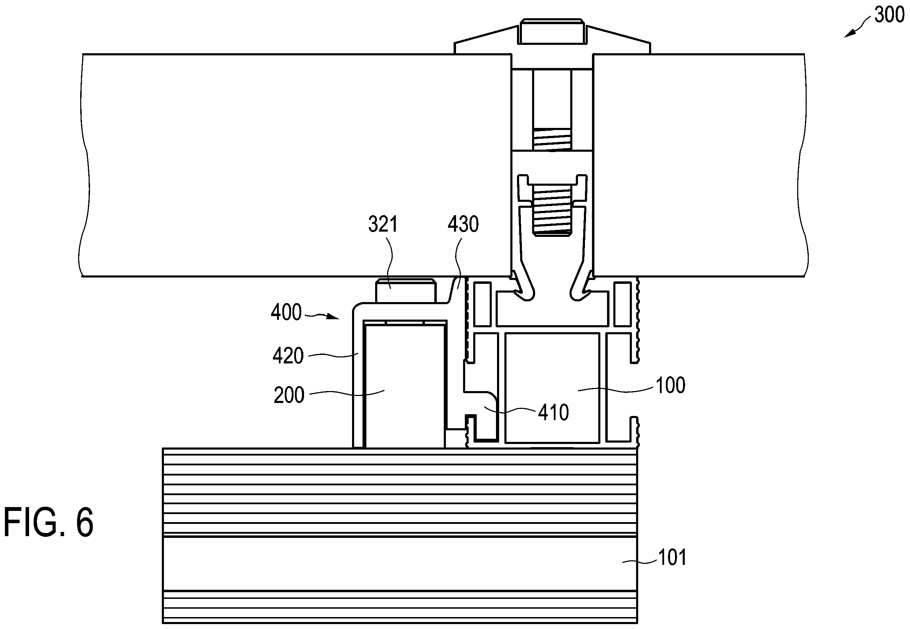

Fig. 6 zeigt einen weiteren Teil des Befestigungssystems 300 aus Fig. 3. Hier ist zusätzlich eine zweite Profilschiene 101 senkrecht zur ersten Profilschiene 100 montiert. Dies geschieht mit Hilfe eines Kreuzverbinders 400. Dessen erster L-förmigen Fortsatz 410 wird in den ersten Aufnahmeraum der ersten Profilschiene 100 aufgenommen. Der Kreuzverbinder 400 und somit die erste Profilschiene ist über den zweiten L-förmigen Fortsatz 420 mittels einer Schraube 321 an einem Kliphalter 200 befestigt. Der Kliphalter 200 ist seinerseits im dritten Aufnahmeraum der zweiten Profilschiene 101 eingesetzt. Der Mittelsteg 430 des Kreuzverbinders liegt dabei an einer gezahnten Außenwand der ersten Profilschiene rutschfest an. So ist eine feste Verbindung zwischen senkrecht zueinander angeordneten Profilschienen schnell und einfach zu realisieren.

### Bezugszeichen:

- 100, 101: Profilschiene
- 110: Auflagefläche
- 120: erster Aufnahmeraum
- 121,131: seitliche Öffnung
- 130: zweiter Aufnahmeraum
- 140: erster zentraler Hohlraum
- 150: erster seitlicher Hohlraum
- 160: zweiter seitlicher Hohlraum
- 170: dritter Aufnahmeraum
- 171: Öffnung
- 172, 174: Steg
- 173, 175: Kröpfung
- 180: untere Wand des dritten Aufnahmeraumes
- 181: untere Wand des zweiten seitlichen Hohlraumes
- 182: untere Wand des dritten seitlichen Hohlraumes
- 200: Kliphalter
- 210: Kopfplatte
- 220: Gewindebohrung
- 230, 240: Schenkel
- 235, 245: Haken
- 250, 269: Steg am Kliphalter
- 300, 301: Befestigungssystem
- 310, 315: Haltekörper
- 316: erster L-förmiger Körper
- 317: zweiter L-förmiger Körper
- 320,321: Schraube
- 330,331: Solarmodul
- 400: Kreuzverbinder
- 410: erster L-förmiger Fortsatz
- 420: zweiter L-förmiger Fortsatz
- 430: Mittelsteg

## Patentansprüche

1. Befestigungssystem (300, 301) für Solarmodule aufweisend:
a) eine Anzahl von Profilschienen (100, 101), wobei jede Profilschiene (100, 101), in einer Querschnittansicht betrachtet, aufweist:
- eine Auflagefläche (110), die eine ebene Unterseite der Profilschiene (100, 101) bildet,
- einen ersten und einen zweiten Aufnahmeraum (120, 130) mit je einer seitlichen Öffnung (121, 131), bei denen die Öffnungen (121, 131) in entgegengesetzte Richtungen weisen,
- einen dritten Aufnahmeraum (170) in Form einer Hammerkopfnut, der eine von der Unterseite der Profilschiene (100, 101) abgewandte Öffnung (171) aufweist, bei denen die Öffnung (171) von zwei bezüglich einer gedachten Mittelebene spiegelsymmetrischen Stegen (172, 174) begrenzt wird, die an ihrem jeweiligen freien Ende jeweils eine nach innen gewandte Kröpfung (173, 175) aufweisen,
- einen ersten rechteckigen allseitig umschlossenen, zentralen Hohlraum (140), der von der Auflagefläche (110) sowie dem ersten, zweiten und dritten Aufnahmeraum (120, 130, 170) begrenzt wird und
- einen ersten und einen zweiten allseitig umschlossenen seitlichen Hohlraum (150, 160), die an einander gegenüberliegenden Seiten des dritten Aufnahmeraumes (170) und jeweils angrenzend an einen aus dem ersten und dem zweiten Aufnahmeraum (120, 130) angeordnet sind;
b) eine Vielzahl von Kliphaltern (200), die jeweils aufweisen:
- eine Kopfplatte (210) mit einer Gewindebohrung (220) sowie
- zwei seitlich an der Kopfplatte (210) angeordnete Schenkel (230, 240), deren von der Kopfplatte (210) abgewandte Enden Haken (235, 245) aufweisen, die ausgebildet sind, Kröpfungen zu hintergreifen, wobei die Haken (235, 245) bezüglich einer Innenseite des jeweiligen Schenkels (230, 240) um einen Winkel von 15° zur Horizontalen hin nach innen geneigt sind, bei denen die Haken (235, 245) komplementäre Formen zu den Kröpfungen (173, 175) der Profilschienen (100, 101) aufweisen,
bei dem die Vielzahl von Kliphaltern (200) in den dritten Aufnahmeräumen (170) der Profilschienen (100, 101) eingesetzt ist und die Haken (235, 245) der Kliphalter (200) die Kröpfungen (173, 175) der Profilschienen (100, 101) dabei hintergreifen und bei dem an einigen der Vielzahl von Kliphaltern (200) mittels in den Gewindebohrungen (220) eingesetzten Schrauben (320, 321) Haltekörper (310, 315) befestigt sind, und
c) zumindest einen Kreuzverbinder (400); wobei mindestens zwei von der Anzahl von Profilschienen (100, 101) zueinander senkrecht derart angeordnet sind, dass der Kreuzverbinder (400), der in einer Querschnittansicht betrachtet aufweist:
- einen Mittelsteg (430), der ein rechtwinkliges Ende und ein abgeschrägtes Ende aufweist,
- einen ersten am Mittelsteg (430) näher am rechtwinkligen als am abgeschrägten Ende angebrachten L-förmigen Fortsatz (410) und
- einen zweiten am Mittelsteg (430) näher am abgeschrägten als am rechtwinkligen Ende und auf der dem ersten L-förmigen Fortsatz (410) gegenüberliegenden Seite des Mittelstegs (430) angebrachten L-förmigen Fortsatz (420), mit dem ersten L-förmigen Fortsatz (410) in den ersten oder den zweiten Aufnahmeraum (120, 130) der einen Profilschiene (100, 101) aufgenommen wird und über den zweiten L-förmigen Fortsatz (420) mittels einer Schraube (321) an einem der Vielzahl von Kliphaltern (200) befestigt ist, welcher seinerseits im dritten Aufnahmeraum (170) der zweiten Profilschiene (101) eingesetzt ist.

2. Befestigungssystem nach Anspruch 1, bei dem die Höhe des ersten zentralen rechteckigen Hohlraums (140) über der Auflagefläche (110) größer ist als die Höhe des ersten und des zweiten Aufnahmeraumes (120, 130) über der Auflagefläche (110), so dass sich der erste zentrale Hohlraum (140) jeweils seitlich mit dem ersten und zweiten seitlichen Hohlraum (150, 160) überlappt.

3. Befestigungssystem nach einem der Ansprüche 1 oder 2, bei dem der erste und der zweite Aufnahmeraum (120, 130) jeweils in Form einer Hammerkopfnut ausgeführt sind.

4. Befestigungssystem nach einem der Ansprüche 1 bis 3, bei dem die Profilschienen (100, 101) seitliche Außenwände aufweisen, welche teilweise oder vollständig über ein gezahntes Profil verfügen.

5. Befestigungssystem nach einem der Ansprüche 1 bis 4, bei dem mindestens zwei Profilschienen (100, 101) über einen Teleskopverbinder, welcher jeweils in den ersten zentralen Hohlraum (140) der beiden Profilschienen (100, 101) aufgenommen wird, miteinander verbunden sind.

6. Befestigungssystem nach einem der Ansprüche 1 bis 5, bei dem die Kopfplatten (210) der Kliphalter (200) jeweils in der Aufsicht quadratisch sind.

## Claims

1. A fastening system (300, 301) for solar modules, including:
a) a number of profile rails (100, 101), wherein each profile rail (100, 101), viewed in cross section, includes:
- a contact surface (110), which forms a planar underside of the profile rail (100, 101),
- a first and a second receiving space (120, 130), each having a lateral opening (121, 131), in which the openings (121, 131) point in opposite directions,
- a third receiving space (170) in the shape of a hammerhead groove, which has an opening (171) that faces away from the underside of the profile rail (100, 101), in which the opening (171) is delimited by two webs (172, 174) mirror-symmetrical with respect to an imaginary center plane, each of which has an inwardly facing bent portion (173, 175) at their respective free end,
- a first rectangular, central hollow space (140) enclosed on all sides, which is delimited by the contact surface (110) as well as by the first, second and third receiving space (120, 130, 170), and
- a first and a second lateral hollow space (150, 160) enclosed on all sides, which are situated on opposite sides of the third receiving space (170) and in each case bordering on one of the first and the second receiving space (120, 130);
b) a plurality of clip holders (200), each of which includes:
- a head plate (210) with a threaded hole (220), as well as
- two legs (230, 240) situated laterally on the head plate (210), the ends of which facing away from the head plate (210) include hooks (235, 245), which are designed to engage behind bent portions, wherein the hooks (235, 245) are inclined inwardly with respect to an inner side of the respective leg (230, 240) at an angle of 15° toward the horizontal, in which the hooks (235, 245) have shapes complementary to the bent portions (173, 175) of the profile rails (100, 101), in which the plurality of clip holders (200) are inserted in the third receiving spaces (170) of the profile rails (100, 101) and the hooks (235, 245) of the clip holders (200) engage behind the bent portions (173, 175) of the profile rails (100, 101) and in which holding bodies (310, 315) are fastened to some of the plurality of clip holders (200) by means of screws (320, 321) inserted into the threaded holes (220), and
c) at least one cross connector (400):
wherein at least two of the number of profile rails (100, 101) are situated perpendicularly to one another in such a way that the cross connector (400), which, viewed in cross section, includes:
- a central web (430), which has a rectangular end and a chamfered end,
- a first, L-shaped extension (410) provided on the central web (430) closer to the rectangular end than the chamfered end,
- a second L-shaped extension (420) provided on the central web (430) closer to the chamfered end than the rectangular end and on the side of the central web (430) opposite the first L-shaped extension (410),
is received with the first L-shaped extension (410) in the first or in the second receiving space (120, 130) of the one profile rail (100, 101) and is fastened via the second L-shaped extension (420) by means of a screw (321) to one of the plurality of clip holders (200), which in turn is inserted in the third receiving space (170) of the second profile rail (101).

2. The fastening system according to Claim 1, in which the height of the first central rectangular hollow space (140) above the contact surface (110) is greater than the height of the first and of the second receiving space (120, 130) over the contact surface (110), so that the first central hollow space (140) overlaps in each case laterally with the first and second lateral hollow space (150, 160).

3. The fastening system according to one of Claims 1 or 2, in which the first and the second receiving space (120, 130) are each designed in the shape of a hammerhead groove.

4. The fastening system according to one of Claims 1 through 3, in which the profile rails (100, 101) have lateral outer walls, which have a partial or complete toothed profile.

5. The fastening system according to one of Claims 1 through 4, in which at least two profile rails (100, 101) are connected to one another via a telescopic connector, which is accommodated in each case in the first central hollow space (140) of the two profile rails (100, 101).

6. The fastening system according to one of Claims 1 through 5, in which the head plates (210) of the clip holders (200) are each square from a top view.

## Revendications

1. Système de fixation (300, 301) destiné à des modules solaires, comprenant :
a) un certain nombre de rails profilés (100, 101),
chaque rail profilé (100, 101) comportant, observé en coupe transversale :
- une surface d'appui (110),
matérialisant une face inférieure plane dudit rail profilé (100, 101),
- des premier et deuxième espaces de réception (120, 130) munis, à chaque fois, d'une ouverture latérale (121, 131),
les ouvertures (121, 131) étant orientées dans des directions opposées,
- un troisième espace de réception (170),
revêtant la forme d'une rainure configurée en tête de marteau et pourvu d'une ouverture (171) pointant à l'opposé de la face inférieure du rail profilé (100, 101), ladite ouverture (171) étant délimitée par deux membrures (172, 174) disposées avec symétrie spéculaire par rapport à un plan médian virtuel et dotées à chaque fois, à leur extrémité libre respective, d'une région coudée (173, 175) tournée vers l'intérieur,
- une première cavité centrale rectangulaire (140) intégralement close, délimitée par la surface d'appui (110),
ainsi que par les premier, deuxième et troisième espaces de réception (120, 130, 170), et
- des première et seconde cavités latérales (150, 160) intégralement closes, qui sont disposées sur des côtés dudit troisième espace de réception (170) pointant à l'opposé l'un de l'autre,
et sont respectivement limitrophes de l'un, parmi lesdits premier et deuxième espaces de réception (120, 130) ;
b) une multiplicité d'organes de retenue clipsables (200), comportant respectivement :
- une plaquette frontale (210) munie d'un perçage taraudé (220), ainsi que
- deux branches (230, 240) qui occupent des positions latérales sur la plaquette frontale (210) et dont les extrémités, tournées à l'opposé de ladite plaquette frontale (210), sont pourvues de crochets (235, 245) conçus pour venir en prise par-derrière avec des régions coudées, lesdits crochets (235, 245) étant inclinés vers l'intérieur vis-à-vis d'une face interne de la branche (230, 240) considérée, en décrivant un angle de 15° par rapport à l'horizontale,
lesquels crochets (235, 245)
présentent des formes complémentaires de celles des régions coudées (173, 175) des rails profilés (100, 101),
sachant que ladite multiplicité d'organes de retenue clipsables (200) est insérée dans les troisièmes espaces de réception (170) desdits rails profilés (100, 101), et que les crochets (235, 245) desdits organes de retenue clipsables (200) viennent alors en prise, par-derrière, avec lesdites régions coudées (173, 175) desdits rails profilés (100, 101), et sachant que des corps de maintien (310, 315) sont fixés à quelques-uns des multiples organes de retenue clipsables (200), au moyen de vis (320, 321) introduites dans les perçages taraudés (220) ; et
c) au moins un croisillon de solidarisation (400) ;
sachant qu'au moins deux rails, au sein du certain nombre de rails profilés (100, 101), sont agencés perpendiculairement l'un à l'autre, de sorte que ledit croisillon de solidarisation (400) comporte, observé en coupe transversale :
- une aile médiane (430),
incluant une extrémité à angle droit et une extrémité biseautée,
- un premier appendice (410) configuré en L et occupant, sur ladite aile médiane (430), un emplacement plus rapproché de l'extrémité à angle droit que de l'extrémité biseautée, et
- un second appendice (420) configuré en L, occupant un emplacement plus rapproché de ladite extrémité biseautée que de ladite extrémité à angle droit, sur ladite aile médiane (430),
et ménagé du côté de ladite aile médiane (430) qui est tourné à l'opposé dudit premier appendice (410) configuré en L,
ledit croisillon étant logé, par le premier appendice (410) configuré en L, dans le premier ou le deuxième espace de réception (120, 130) de l'un des rails profilés (100, 101), et étant fixé par l'intermédiaire du second appendice (420) configuré en L, au moyen d'une vis (321), à l'un des multiples organes de retenue clipsables (200), lequel est à son tour inséré dans le troisième espace de réception (170) du second rail profilé (101).

2. Système de fixation selon la revendication 1, dans lequel la hauteur de la première cavité centrale rectangulaire (140), au-dessus de la surface d'appui (110), est supérieure à la hauteur des premier et deuxième espaces de réception (120, 130) au-dessus de ladite surface d'appui (110), de sorte que ladite première cavité centrale (140) chevauche, à chaque fois, les première et seconde cavités latérales (150, 160) dans le sens latéral.

3. Système de fixation selon l'une des revendications 1 ou 2, dans lequel les premier et deuxième espaces de réception (120, 130) sont réalisés, à chaque fois, sous la forme d'une rainure configurée en tête de marteau.

4. Système de fixation selon l'une des revendications 1 à 3, dans lequel les rails profilés (100, 101) comportent des parois latérales extérieures pourvues d'un profil denté, en partie ou en totalité.

5. Système de fixation selon l'une des revendications 1 à 4, dans lequel au moins deux rails profilés (100, 101) sont reliés l'un à l'autre par l'intermédiaire d'un élément de liaison télescopique logé, à chaque fois, dans la première cavité centrale (140) des deux rails profilés (100, 101).

6. Système de fixation selon l'une des revendications 1 à 5, dans lequel les plaquettes frontales (210) des organes de retenue clipsables (200) sont respectivement dotées d'une configuration carrée en observation par-dessus.
